# FASCICULE DE BREVET EUROPEEN

(11) **EP 4 658 917 B1**
(45) Date de publication et mention de la délivrance du brevet: **25.11.2026**
(21) Numéro de dépôt: 24706486.8
(22) Date de dépôt: 26.01.2024
(51) Int. Cl.: F16D 25/08, F01D 3/02, B64D 35/00, F01D 15/10, F01D 15/12, F01D 25/18, F02K 5/00

(54) **ASSEMBLAGE POUR ENSEMBLE PROPULSIF D'AERONEF AVEC ACCOUPLEMENT DEBRAYABLE DE DEUX ARBRES PAR UN MANCHON D'ACCOUPLEMENT A ACTIONNEMENT PAR FLUIDE PRESSURISE**
ANORDNUNG FÜR EINE FLUGZEUGANTRIEBSANORDNUNG MIT ENTKUPPELBARER KOPPLUNG ZWEIER WELLEN DURCH EINE KUPPLUNGSHÜLSE MIT DRUCKFLUIDBETÄTIGUNG
ASSEMBLY FOR AN AIRCRAFT PROPULSION ASSEMBLY WITH DISENGAGEABLE COUPLING OF TWO SHAFTS BY A COUPLING SLEEVE WITH PRESSURIZED-FLUID ACTUATION

(30) Priorité: 30.01.2023 FR 2300846
(43) Date de publication de la demande: 10.12.2025
(73) Titulaire: Safran Helicopter Engines, 64510 Bordes (FR)
(72) Inventeur: VIVE, Loïs Pierre Denis, 77550 MOISSY-CRAMAYEL (FR); APOSTIN, Lucie Stéphanie, 77550 MOISSY-CRAMAYEL (FR); SARRAT, Christian Omer Henri, 77550 MOISSY-CRAMAYEL (FR); JOUSSELIN, Samuel Christian, 77550 MOISSY-CRAMAYEL (FR)
(74) Mandataire: Santarelli
(86) Numéro de dépôt international: PCT/FR2024/050111
(87) Numéro de publication internationale: WO 2024/161082

(56) Documents cités:
- EP-A1- 3 693 271
- US-A1- 2021 061 453
- US-A1- 2021 122 239

## Description

### Domaine technique

La présente invention se rapporte au domaine des ensembles propulsifs d'aéronefs et concerne plus particulièrement un assemblage à accouplement débrayable de deux arbres, par exemple un premier arbre en prise mécanique avec un rotor de machine électrique, et un deuxième arbre en prise mécanique avec un rotor de turbomachine ou un récepteur tel qu'une hélice ou une soufflante.

De tels assemblages visent notamment à permettre une transmission de couple efficace entre une turbomachine et une machine électrique, tout en permettant un désaccouplement entre celles-ci en cas de défaillance, ou pour prévenir une défaillance du moteur électrique, ou des équipements, composants ou système en relation avec ce dernier, sans nécessiter l'arrêt complet de la turbomachine.

Les moteurs de propulsion principaux des avions entrainent généralement des machines de génération d'énergie électrique non propulsive, à une vitesse modérée, typiquement de l'ordre de quelques milliers de tours par minute. Ces machines électriques sont parfois sujettes à des défaillances, notamment d'origine mécanique, avec des taux de prévalence relativement élevés par rapport à la fiabilité exigée en ce qui concerne les moteurs principaux. Un moyen de pouvoir continuer à utiliser le moteur propulsif est alors de déconnecter mécaniquement la machine électrique de la turbomachine.

Avec le développement de systèmes propulsifs hybrides thermique/électrique, il est souhaitable de développer des systèmes de désaccouplement mécanique fiables, légers, peu coûteux, et facilement intégrables, qui soient en outre adaptés aux spécificités de tels systèmes.

En effet, dans les ensembles propulsifs comprenant un turbogénérateur destiné à générer de l'énergie électrique propulsive, les machines électriques sont d'une puissance d'un ordre de grandeur comparable à la puissance de la turbomachine (ceci dépendant néanmoins du nombre de machines électriques entrainées par la turbomachine), alors que la machine électrique non propulsive d'un ensemble propulsif conventionnel est relativement « petite » par rapport au moteur thermique.

De plus, la puissance mécanique reçue par une machine électrique au sein d'un tel ensemble propulsif est considérablement supérieure à celle reçue par une machine électrique non propulsive d'un ensemble propulsif conventionnel.

En outre, la masse d'une telle machine se révèle non négligeable au regard de celle du système propulsif complet, ce qui se traduit par un fort intérêt à optimiser cette masse par l'utilisation de machines électriques à haute vitesse (de l'ordre de plusieurs dizaines de milliers de tours par minute) et/ou par l'utilisation de machines à aimants permanents, également dénommées « PMG » d'après la terminologie anglo-saxonne « Permanent Magnet Generators », qui présentent une densité massique de puissance élevée, mais pour lesquelles les cas de court-circuit ne peuvent être traités simplement par désexcitation du rotor.

Par ailleurs, des assemblages à accouplement débrayables trouvent également une application au sein d'ensembles propulsifs hybrides « parallèles », où la puissance peut être sélectivement fournie par un moteur thermique et/ou par un moteur électrique à un récepteur tel qu'une hélice. Lorsque l'on souhaite utiliser des machines électriques réversibles, notamment pour pouvoir réaliser des fonctions telles que la recharge des batteries de puissance, il est alors intéressant voire nécessaire de disposer également de mécanismes d'accouplement débrayables entre le moteur-générateur électrique et le récepteur.

### État de la technique antérieure

Une grande variété de dispositifs d'accouplement débrayable entre deux arbres sont connus. Ces dispositifs consistent essentiellement en :
- des dispositifs à rampe, dans lesquels un actionneur agit radialement sur une rampe solidaire de l'un des arbres de manière à provoquer un déplacement axial de l'arbre causant le désaccouplement entre ce dernier et l'autre arbre ;
- des dispositifs à vis, qui fonctionnent selon un principe proche du précédent, la rampe étant remplacée par un filetage et l'actionneur étant conformé pour agir sur le filetage et provoquer le déplacement axial de l'arbre à la manière d'un effet vis-écrou ;
- des dispositifs à bille, dans lesquels la liaison entre les arbres est réalisée par l'intermédiaire de billes susceptibles d'être désengagées de leur logement pour opérer le désaccouplement ;
- des dispositifs à roue libre débrayables sur commande ;
- des dispositifs à section frangible actionnée, dans lesquels la rupture d'une section est provoquée par contact avec un organe de friction commandé à cet effet ;
- des dispositifs à section frangible par fusion thermique ; et
- des dispositifs à piston axial, dans lesquels un piston est déplacé axialement pour entraîner l'un des arbres à se désaccoupler de l'autre arbre.

La mise en œuvre des dispositifs à rampe et de ceux à vis présente un risque d'à-coups pouvant limiter leur capacité à fonctionner à haute vitesse, et ces dispositifs présentent en général un risque d'usure prématurée. De plus, l'encombrement radial de l'actionneur de tels dispositifs est parfois inacceptable.

Les dispositifs à billes se caractérisent en général par un fonctionnement irréversible, interdisant toute possibilité de réarmement.

Les dispositifs à section frangible sont destructifs et risquent donc d'endommager les composants à proximité. De plus, ces dispositifs ne peuvent donc pas être testés.

Le document EP3746669A1 fournit un exemple de dispositif du dernier type, c'est-à-dire à piston axial, dans lequel un actionneur hydraulique annulaire est agencé autour d'un manchon d'accouplement lui-même interposé axialement entre les deux arbres à relier. L'actionneur hydraulique est configuré pour déplacer axialement le manchon d'accouplement de manière à désaccoupler ce dernier de l'un des arbres, sous l'effet d'une pression de fluide.

Un tel dispositif se révèle toutefois encombrant, et coûteux du fait d'un nombre relativement important de pièces mobiles impliquées dans son fonctionnement.

D'autres exemples sont divulgués par US 2021/061453, EP 3 693 271 et US 2021/122239.

Il existe ainsi un besoin pour des assemblages à accouplement débrayable qui soient de masse et d'encombrement limités.

Il existe en outre un besoin pour des assemblages à accouplement débrayable qui soient autant que possible adaptés à l'accouplage d'arbres destinés à la transmission d'une puissance propulsive (ayant typiquement à transmettre des niveaux de puissance de l'ordre de plusieurs centaines de kilowatts) et/ou d'arbres tournant à des vitesses élevées (typiquement de l'ordre de plusieurs dizaines de milliers de tours par minute), et/ou qui soient adaptés à une transmission de puissance dans les deux sens de rotation. Cette dernière propriété est notamment mise à profit dans le cas de machines électriques de génération de puissance propulsive qui jouent aussi le rôle de démarreurs pour des turbomachines.

Il existe enfin un besoin pour des assemblages à accouplement débrayable présentant un mode de fonctionnement réversible permettant leur réarmement.

### Exposé de l'invention

L'invention a pour but de remédier au moins en partie à ces besoins.

Elle propose à cet effet un assemblage à accouplement débrayable pour ensemble propulsif d'aéronef, comprenant :
- un premier arbre et un deuxième arbre montés à rotation selon un axe par rapport à un stator ;
- un manchon d'accouplement comprenant des premiers moyens d'accouplement agencés d'un premier côté axial et des deuxièmes moyens d'accouplement agencés d'un deuxième côté axial, le manchon d'accouplement étant déplaçable axialement entre une première position dans laquelle les premiers et deuxièmes moyens d'accouplement sont respectivement accouplés aux premier et deuxième arbres, et une deuxième position dans laquelle le manchon d'accouplement est décalé vers le deuxième côté axial par rapport à la première position de sorte que les premiers moyens d'accouplement soient désaccouplés du premier arbre ;
- des chambres de fluide délimitées entre le manchon d'accouplement et au moins l'un des premier et deuxième arbres ;
- un tube solidaire du stator et s'étendant dans un alésage du manchon d'accouplement ; et
- des moyens d'alimentation en fluide configurés pour alimenter sélectivement une première sélection de chambre(s) parmi lesdites chambres de fluide et une deuxième sélection de chambre(s) parmi lesdites chambres de fluide avec un fluide, par l'intermédiaire dudit tube ;
dans lequel les chambres de fluide sont configurées de sorte que :
- au moins lorsque le manchon d'accouplement est dans la première position, une pression du fluide dans la première sélection de chambre(s) applique au manchon d'accouplement un premier effort axial orienté vers le premier côté axial ; et que
- une pression du fluide dans la deuxième sélection de chambre(s) applique au manchon d'accouplement un deuxième effort axial orienté vers le deuxième côté axial de manière à amener ce dernier dans la deuxième position.

L'invention propose ainsi un assemblage à accouplement débrayable d'encombrement et de masse limités et adapté aux applications mentionnées ci-dessus.

Dans des modes de réalisation préférés de l'invention, les moyens d'alimentation en fluide comprennent un premier canal d'alimentation en communication fluidique avec la première sélection de chambre(s), un deuxième canal d'alimentation en communication fluidique avec la deuxième sélection de chambre(s), et un dispositif d'alimentation sélective du premier canal d'alimentation et du deuxième canal d'alimentation avec ledit fluide.

Dans des modes de réalisation préférés de l'invention, la première sélection de chambre(s) comprend des chambres de lubrification des premiers et deuxièmes moyens d'accouplement, et au moins une première chambre d'actionnement configurée de sorte que, au moins lorsque le manchon d'accouplement est dans la première position, ledit premier effort axial est au moins majoritairement produit par la pression du fluide dans la ou les première(s) chambre(s) d'actionnement.

De préférence, la deuxième sélection de chambre(s) comprend au moins une deuxième chambre d'actionnement et ne comprends pas lesdites chambres de lubrification des premiers et deuxièmes moyens d'accouplement.

En variante, la première sélection de chambre(s) comprend uniquement une ou plusieurs chambre(s) de lubrification des premiers moyens d'accouplement et une ou plusieurs chambre(s) de lubrification des deuxièmes moyens d'accouplement, et la deuxième sélection de chambre(s) comprend uniquement la ou les chambre(s) de lubrification des premiers moyens d'accouplement.

Dans des modes de réalisation préférés de l'invention, les premiers et/ou deuxièmes moyens d'accouplement forment des cannelures ou définissent une liaison par crabots.

L'invention concerne également un ensemble propulsif pour aéronef, comprenant un récepteur, une machine électrique, une turbomachine et un assemblage du type décrit ci-dessus, dans lequel le premier arbre de l'assemblage est en prise mécanique avec un rotor de la machine électrique tandis que le deuxième arbre de l'assemblage est en prise mécanique avec un rotor de la turbomachine, et dans lequel au moins l'une parmi la machine électrique et la turbomachine est configurée pour transmettre une puissance propulsive au récepteur.

Dans des modes de réalisation préférés de l'invention, l'ensemble propulsif comprend un pignon de renvoi en prise mécanique avec le deuxième arbre et avec le rotor de la turbomachine.

De préférence, au moins la première sélection de chambre(s) est en communication fluidique avec une interface d'engrènement du deuxième arbre avec le pignon de renvoi.

De préférence, la deuxième sélection de chambre(s) est aussi en communication fluidique avec l'interface.

Dans des modes de réalisation préférés de l'invention, la machine électrique est configurée pour recevoir, du premier arbre, une puissance propulsive.

### Brève description des dessins

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
[Fig. 1] est une vue schématique en coupe axiale d'un ensemble propulsif d'aéronef comprenant une machine électrique, une turbomachine et un assemblage à accouplement débrayable ;
[Fig. 2] est une vue schématique en coupe axiale d'un assemblage à accouplement débrayable selon un premier mode de réalisation de l'invention pouvant faire partie de l'ensemble propulsif de la figure 1, montré dans une configuration d'accouplement ;
[Fig. 3] est une vue semblable à la figure 2, dans laquelle l'assemblage est montré au début d'une phase de désaccouplement ;
[Fig. 4] est une vue semblable à la figure 2, dans laquelle l'assemblage est montré dans une configuration de désaccouplement au terme de la phase de désaccouplement ;
[Fig. 5] est une vue semblable à la figure 2, illustrant un assemblage à accouplement débrayable selon un deuxième mode de réalisation de l'invention, pouvant également faire partie de l'ensemble propulsif de la figure 1 ;
[Fig. 6] est une vue semblable à la figure 5, dans laquelle l'assemblage est montré au début d'une phase de désaccouplement ;
[Fig. 7] est une vue semblable à la figure 5, dans laquelle l'assemblage est montré dans une configuration de désaccouplement au terme de la phase de désaccouplement ;
[Fig. 8] est une vue semblable à la figure 2, illustrant une variante avec ressort de précharge.

Dans l'ensemble de ces figures, des références identiques peuvent désigner des éléments identiques ou analogues.

### Exposé détaillé de modes de réalisation préférés

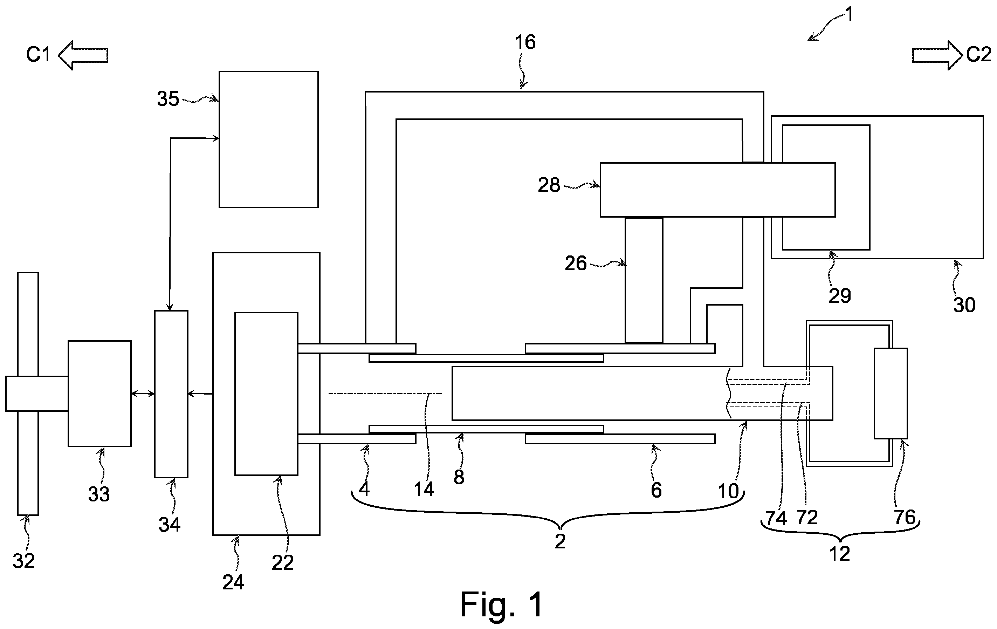

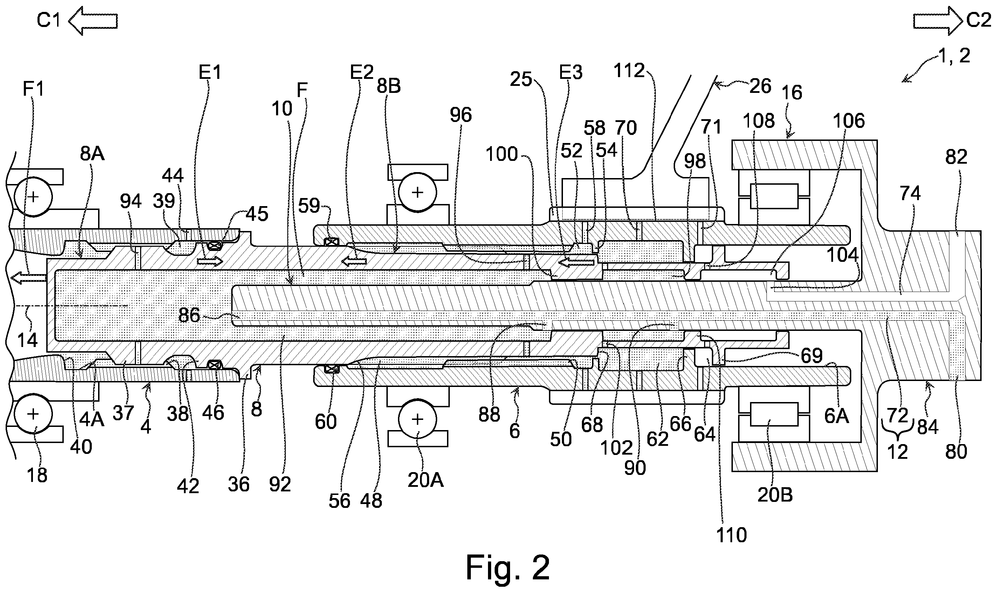

La figure 1 illustre très schématiquement un ensemble propulsif 1 pour aéronef, comprenant un assemblage 2 à accouplement débrayable qui comprend de manière générale un premier arbre 4, un deuxième arbre 6, un manchon d'accouplement 8, et un tube 10 associé à des moyens d'alimentation en fluide 12. L'assemblage 2, visible avec davantage de détails sur les figures 2 à 4, est destiné à transmettre un mouvement de rotation entre les arbres 4 et 6.

Le premier arbre 4 est typiquement monté à rotation selon un axe 14 par rapport à un stator 16 au moyen d'un ou plusieurs paliers de guidage 18 (dont l'un est visible sur les figures 2-4), d'un premier côté C1 de l'assemblage. Le deuxième arbre 6 est typiquement monté à rotation selon l'axe 14 par rapport au stator 16 au moyen d'un ou plusieurs - par exemple deux - paliers de guidage 20A, 20B, d'un deuxième côté C2 de l'assemblage. Le tube 10 est préférentiellement solidaire du stator 16 et s'étend dans un alésage défini au sein du manchon d'accouplement 8, à partir d'une extrémité de ce dernier, par exemple située du deuxième côté C2.

L'axe 14 définit une direction « axiale » selon la terminologie utilisée dans la présente description.

Dans des modes de réalisation, le premier arbre 4 est ainsi en prise mécanique avec un rotor de machine électrique, et le deuxième arbre 6 est en prise mécanique avec un rotor de turbomachine. Par éléments « en prise mécanique », il faut comprendre que les éléments sont solidaires en rotation ou forment un engrenage ou un train d'engrenages en étant reliés mécaniquement par l'intermédiaire d'un ou plusieurs pignons.

Dans l'exemple illustré, le premier arbre 4 est ainsi solidaire du rotor 22 d'une machine électrique 24 (figure 1), tandis que le deuxième arbre 6 forme un pignon du fait qu'il présente des cannelures 25 par lesquelles le deuxième arbre 6 est en prise avec un pignon de renvoi 26 (visible en entier sur la figure 1 et en partie sur les figures 2-4), ce dernier étant par ailleurs en prise avec un rotor 28 d'une turbine 29 d'une turbomachine 30 (figure 1). Le pignon de renvoi 26 assure ainsi une transmission de mouvement de rotation entre le deuxième arbre 6 et le rotor 28 de la turbine 29.

Par ailleurs, l'ensemble propulsif 1 comprend en outre un récepteur 32, tel qu'une hélice ou une soufflante, dont l'entraînement repose sur de l'énergie fournie par au moins l'une parmi la machine électrique 24 et la turbomachine 30 (le cas échéant, par le rotor 28 de la turbine 29), pour assurer la propulsion d'un aéronef. L'énergie fournie par la machine électrique 24 peut être de l'énergie électrique ou mécanique, selon le type d'architecture de l'ensemble propulsif et selon le rôle joué par la machine électrique au sein de cet ensemble propulsif.

L'assemblage 2 est notamment destiné à faire partie d'un système de transmission mécanique de puissance propulsive au sein d'un ensemble propulsif hybride d'aéronef.

L'ensemble propulsif 1 est par exemple un ensemble propulsif hybride série, dans lequel le récepteur 32 est en prise mécanique avec un moteur électrique 33 alimenté en énergie électrique par une unité de répartition 34, elle-même alimentée en énergie électrique en parallèle par une batterie de puissance 35, d'une part, et par la machine électrique 24 d'autre part. Cette dernière est ainsi configurée pour fonctionner en tant que générateur d'énergie électrique propulsive en convertissant de l'énergie mécanique reçue de la turbomachine 30 et en fournissant l'énergie électrique résultante à l'unité de répartition 34. Cette dernière comprend typiquement des moyens de conversion DC/AC et AC/DC. L'unité de répartition 34 permet ainsi en outre de recharger la batterie de puissance 35 avec un surplus de puissance électrique dans certaines phases de fonctionnement. Dans un tel cas, un assemblage à accouplement débrayable analogue à l'assemblage 2, qui va être décrit en détail dans ce qui suit, peut, en variante ou de manière complémentaire, assurer l'accouplement entre un arbre du récepteur 32 et le rotor du moteur électrique 33.

En variante, l'ensemble propulsif 1 peut être du type hybride parallèle, c'est-à-dire comprenant un système de transmission mécanique, par exemple du type comprenant un réducteur à train d'engrenages, configuré pour accoupler au récepteur la machine électrique, fonctionnant sélectivement en tant que moteur ou générateur, et la turbomachine, en parallèle. Dans ce cas, la machine électrique est alimentée en énergie électrique par une batterie de puissance lorsqu'elle fonctionne en tant que moteur et recharge ladite batterie lorsqu'elle fonctionne en tant que générateur entraîné par la turbomachine, par l'intermédiaire du système de transmission mécanique. Dans une telle application, l'assemblage à accouplement débrayable est par exemple tel que le premier arbre et le deuxième arbre soient respectivement en prise mécanique avec le système de transmission mécanique et avec le rotor de la machine électrique.

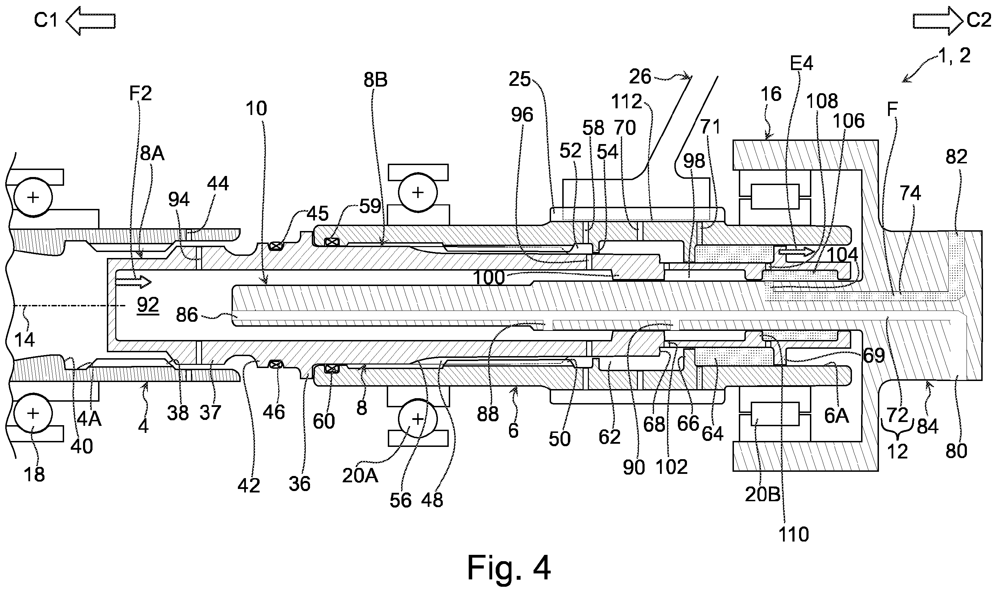

Pour permettre la transmission du mouvement de rotation entre les arbres 4 et 6, l'assemblage 2 comprend le manchon d'accouplement 8, agencé coaxialement aux arbres 4 et 6, et déplaçable le long de l'axe 14 entre une première position, également dénommée position accouplée et visible sur la figure 2, dans laquelle le manchon 8 assure effectivement un accouplement entre les deux arbres 4 et 6, et une deuxième position, également dénommée position débrayée et visible sur la figure 4, dans laquelle le manchon 8 n'assure pas cet accouplement et permet ainsi une rotation des arbres 4 et 6 l'un par rapport à l'autre.

Le déplacement du manchon d'accouplement 8 depuis la position accouplée jusque dans la position débrayée est obtenu en alimentant sélectivement des chambres de fluide, définies entre le manchon 8 et au moins l'un des arbres 4 et 6, avec un fluide F (représenté par des points sur les figures) fourni par les moyens d'alimentation en fluide 12 par l'intermédiaire du tube 10, de sorte qu'une pression du fluide F dans la ou les chambres de fluide considérée(s) applique un effort axial au manchon 8 tendant à déplacer axialement le manchon 8. La pression du fluide F est par exemple induite par une centrifugation du fluide au contact des pièces en rotation qui délimitent la ou les chambres considérée(s). Dans un tel cas, l'effort axial est d'autant plus intense que le régime de rotation de ces pièces est élevé.

Les positions accouplée et débrayée sont avantageusement définies au moyen d'une butée 36, telle qu'une collerette, venant, dans le premier cas (figure 2), en appui contre une extrémité du premier arbre 4, et dans le deuxième cas (figure 4), en appui contre une extrémité du deuxième arbre 6.

Plus précisément, l'invention prévoit d'alimenter sélectivement une première sélection de chambre(s) et une deuxième sélection de chambre(s), de sorte que dans le premier cas, la pression du fluide F dans les chambres exerce sur le manchon 8 un premier effort axial F1 (figure 2) orienté vers le premier côté axial C1 et tendant ainsi à maintenir le manchon 8 dans la position accouplée, et de sorte que dans le deuxième cas, la pression du fluide F dans les chambres exerce sur le manchon 8 un deuxième effort axial F2 orienté vers le deuxième côté axial C2 et tendant ainsi à déplacer le manchon 8 vers la position débrayée. De plus, dans les modes de réalisation préférentiels illustrés, le fluide F précité est également mis à profit pour lubrifier des moyens d'accouplement du manchon 8 aux arbres 4 et 6, comme cela apparaîtra plus clairement dans ce qui suit. Dans un tel cas, le fluide F choisi est donc un lubrifiant tel que de l'huile.

Dans l'exemple illustré, le manchon d'accouplement 8 présente une première partie 8A située du premier côté C1 et s'étendant à l'intérieur d'un alésage 4A du premier arbre 4, ainsi qu'une deuxième partie 8B située du deuxième côté C2 et s'étendant à l'intérieur d'un alésage 6A du deuxième arbre 6, les arbres 4 et 6 étant en effet creux.

La première partie 8A du manchon 8 comporte des premiers moyens d'accouplement 37 par lesquels le manchon 8 est accouplé au premier arbre 4, dans la position accouplée (figure 2).

Dans l'exemple illustré, les premiers moyens d'accouplement 37 sont des cannelures s'étendant radialement vers l'extérieur à partir d'une surface externe de la première partie 8A du manchon 8, et coopérant par engagement réciproque avec des cannelures 38 s'étendant radialement vers l'intérieur à partir d'une surface interne du premier arbre 4 délimitant l'alésage de ce dernier.

Le premier arbre 4 et la première partie 8A du manchon 8 sont configurés pour définir une première chambre de lubrification 39 destinée à permettre la lubrification des premiers moyens d'accouplement 37, dans la position accouplée (figure 2).

À cet effet, le premier arbre 4 comporte par exemple une structure 40, telle qu'un épaulement, formée en saillie vers l'intérieur à partir de la surface interne de l'arbre 4 de manière à venir à faible distance de la surface externe de la première partie 8A, au-delà des premiers moyens d'accouplement 37 en direction du premier côté C1. De plus, la première partie 8A comporte par exemple une structure 42, telle qu'une collerette, formée en saillie vers l'extérieur à partir de la surface externe de la première partie 8A de manière à venir à faible distance de la surface interne de l'arbre 4, au-delà des premiers moyens d'accouplement 37 en direction du deuxième côté C2. Les structures 40 et 42 délimitent ainsi axialement entre elles la première chambre de lubrification 39 des premiers moyens d'accouplement 37.

Le premier arbre 4 comporte par exemple un ou plusieurs premiers orifices d'évacuation 44 raccordant la première chambre de lubrification 39 à l'extérieur de l'arbre.

Dans l'exemple illustré, l'étanchéité de la chambre 39 est renforcée au moyen d'un joint annulaire compressible 45 logé dans une gorge 46 agencée au-delà de la structure 42 en direction du deuxième côté C2 et formée dans l'un parmi le premier arbre 4 et la première partie 8A du manchon 8, de sorte que le joint 45 exerce une pression contre l'autre de ces deux éléments.

La pression du fluide F au sein de la chambre 39 se traduit par l'application d'un effort axial E1 sur le manchon 8.

La deuxième partie 8B du manchon 8 comporte des deuxièmes moyens d'accouplement 48 par lesquels le manchon 8 est accouplé au deuxième arbre 6, dans la position accouplée (figure 2).

Dans l'exemple illustré, les deuxièmes moyens d'accouplement 48 sont des cannelures s'étendant radialement vers l'extérieur à partir d'une surface externe de la deuxième partie 8B du manchon 8, et coopérant par engagement réciproque avec des cannelures 50 s'étendant radialement vers l'intérieur à partir d'une surface interne du deuxième arbre 6 délimitant l'alésage de ce dernier.

Le deuxième arbre 6 et la deuxième partie 8B du manchon 8 sont configurés pour définir une deuxième chambre de lubrification 52 destinée à assurer la lubrification des deuxièmes moyens d'accouplement 48, dans la position accouplée (figure 2).

À cet effet, le deuxième arbre 6 comporte par exemple une structure 54, telle qu'une collerette, formée en saillie vers l'intérieur à partir de la surface interne de l'arbre 6 de manière à venir à faible distance de la surface externe de la deuxième partie 8B, au-delà des deuxièmes moyens d'accouplement 48 en direction du deuxième côté C2. De plus, la deuxième partie 8B comporte par exemple une structure 56, telle qu'un élargissement de section progressif, formée en saillie vers l'extérieur à partir de la surface externe de la deuxième partie 8B de manière à venir à faible distance de la surface interne de l'arbre 6, au-delà des deuxièmes moyens d'accouplement 48 en direction du premier côté C1. Les structures 54 et 56 délimitent ainsi axialement entre elles la deuxième chambre de lubrification 52.

Le deuxième arbre 6 comporte par exemple un ou plusieurs deuxièmes orifices d'évacuation 58 raccordant la deuxième chambre de lubrification 52 à l'extérieur de l'arbre, comme cela apparaîtra plus clairement dans ce qui suit.

Dans l'exemple illustré, l'étanchéité de la chambre 52 est renforcée au moyen d'un joint annulaire compressible 59 logé dans une gorge 60 agencée au-delà de la structure 56 en direction du premier côté C1 et formée dans le deuxième arbre 6 et/ou dans la deuxième partie 8B du manchon 8.

La pression du fluide F au sein de la chambre 52 se traduit par l'application d'un effort axial E2 sur le manchon 8.

Par ailleurs, dans le mode de réalisation des figures 2-4, le manchon d'accouplement 8 et le deuxième arbre 6 délimitent entre eux une première chambre d'actionnement 62, par exemple de forme annulaire, ainsi qu'une deuxième chambre d'actionnement 64, par exemple également de forme annulaire.

La première chambre d'actionnement 62 est configurée de sorte que, au moins lorsque le manchon d'accouplement est dans la première position, la pression du fluide F au sein de la première chambre d'actionnement 62 se traduit par l'application, sur le manchon d'accouplement 8, d'un effort axial E3 orienté vers le premier côté axial C1.

Inversement, la deuxième chambre d'actionnement 64 est configurée de sorte que la pression du fluide F au sein de cette chambre se traduit par l'application, sur le manchon d'accouplement 8, d'un effort axial E4 orienté vers le deuxième côté axial C2.

Les chambres de lubrification 39 et 52 sont configurées de sorte que les efforts axiaux E1 et E2 appliqués au manchon 8 respectivement du fait des pressions de fluide au sein de ces chambres de lubrification 39 et 52 se compensent sensiblement. En variante, ces chambres peuvent être configurées de sorte que les efforts axiaux E1 et E2 produisent une résultante de même sens que l'effort axial E3, c'est-à-dire orientée en direction du premier côté C1, ou encore produisent une résultante de sens opposé à l'effort axial E3 mais d'amplitude inférieure à celle de l'effort axial E3. Dans tous les cas, il est ainsi fait en sorte que le premier effort axial F1 résultant de l'ensemble des efforts axiaux E1, E2, E3 soit bien orienté en direction du premier côté C1.

La personne du métier comprendra que les moyens pour parvenir à un tel résultat reposent sur les choix d'orientation des surfaces délimitant les chambres de lubrification 39 et 52 et les chambres d'actionnement 62 et 64, sur les diamètres intérieurs et extérieurs respectifs des chambres, et sur le choix d'agencer du premier côté C1 ou du deuxième côté C2 respectivement une surface solidaire du manchon 8 ou de l'un des arbres 4 et 6.

Ainsi, dans l'exemple illustré, les surfaces qui délimitent intérieurement et extérieurement les chambres d'actionnement 62 et 64 sont de forme cylindrique et ne contribuent donc pas aux efforts axiaux E3 et E4. De plus, du deuxième côté axial C2, la première chambre d'actionnement 62 est délimitée axialement intégralement par une surface solidaire de l'arbre 6, par exemple définie par une collerette 66 de l'arbre, tandis que du premier côté axial C1, la première chambre d'actionnement 62 est (au moins) en partie délimitée par une surface solidaire du manchon d'accouplement 8, par exemple définie par un épaulement 68 du manchon, et sur laquelle s'exerce l'effort axial E3 correspondant. Quant à la deuxième chambre d'actionnement 64, elle est délimitée axialement par une surface solidaire de l'arbre 6, par exemple définie par la collerette 66, du premier côté axial C1, et, du deuxième côté axial C2, par une surface solidaire du manchon d'accouplement 8, par exemple définie par une collerette 69 du manchon, et sur laquelle s'exerce l'effort axial E4 correspondant. D'autres configurations des surfaces délimitant les chambres d'actionnement 62 et 64 sont bien entendu possibles.

Le deuxième arbre 6 comporte par exemple un ou plusieurs troisièmes orifices d'évacuation 70 raccordant la première chambre d'actionnement 62 à l'extérieur de l'arbre, et un ou plusieurs quatrièmes orifices d'évacuation 71 raccordant la deuxième chambre d'actionnement 64 à l'extérieur de l'arbre, comme cela apparaîtra plus clairement dans ce qui suit.

Par ailleurs, les moyens d'alimentation en fluide 12 comprennent avantageusement un premier canal d'alimentation 72 et un deuxième canal d'alimentation 74 formés au sein du tube 10, ainsi qu'un dispositif 76 d'alimentation sélective du premier canal d'alimentation 72 et du deuxième canal d'alimentation 74 avec le fluide F (figure 1). Il faut comprendre par-là que le dispositif 76 comprend une source apte à délivrer le fluide F sous pression, et des moyens, tels qu'une ou plusieurs vannes, pour commander l'alimentation en fluide F de l'un ou l'autre des canaux d'alimentation 72 et 74.

Le premier canal d'alimentation 72 et le deuxième canal d'alimentation 74 comprennent par exemple des entrées respectives 80 et 82, définies dans une partie d'extrémité 84 du tube 10 située au-delà du deuxième arbre 6 du deuxième côté C2, et raccordées au dispositif 76.

Le premier canal d'alimentation 72 comprend par exemple une première sortie 86, une deuxième sortie 88, et une troisième sortie 90.

Les première et deuxième sorties 86, 88 débouchent dans une chambre intermédiaire de lubrification 92 définie entre le manchon 8 et le tube 10.

Le manchon 8 comporte des premiers orifices intermédiaires 94 qui, au moins dans la position accouplée, mettent la chambre intermédiaire de lubrification 92 en communication fluidique avec la première chambre de lubrification 39. Les premiers orifices intermédiaires 94 sont par exemple formés au travers des cannelures 38. De plus, le manchon 8 comporte des deuxièmes orifices intermédiaires 96 qui, au moins dans la position accouplée, mettent la chambre intermédiaire de lubrification 92 en communication fluidique avec la deuxième chambre de lubrification 52.

La troisième sortie 90 débouche dans une première chambre intermédiaire d'actionnement 98 définie entre le manchon 8 et le tube 10 et séparée de la chambre intermédiaire de lubrification 92, par exemple par une première portion à section interne restreinte 100 du manchon 8 conformée pour ménager un faible jeu vis-à-vis du tube 10 et ainsi limiter au mieux l'écoulement de fluide F axialement de part et d'autre de cette portion 100.

Le manchon 8 comporte des troisièmes orifices intermédiaires 102 qui, au moins dans la position accouplée, mettent la première chambre intermédiaire d'actionnement 98 en communication fluidique avec la première chambre d'actionnement 62.

La première portion à section interne restreinte 100 du manchon 8 est agencée de manière à ménager le faible jeu vis-à-vis du tube 10 indépendamment de la position axiale du manchon 8 (depuis la position accouplée jusque dans la position débrayée) et ainsi maintenir une séparation étanche ou sensiblement étanche entre la chambre intermédiaire de lubrification 92 et la première chambre intermédiaire d'actionnement 98 dans toutes les phases d'utilisation de l'assemblage.

Dans l'exemple illustré, les troisièmes orifices intermédiaires 102 sont agencés de manière à mettre la première chambre intermédiaire d'actionnement 98 en communication fluidique avec la première chambre d'actionnement 62 indépendamment de la position axiale du manchon 8 (depuis la position accouplée jusque dans la position débrayée), ce qui autorise un fonctionnement réversible de l'assemblage 2 comme cela apparaîtra plus clairement dans ce qui suit.

Le deuxième canal d'alimentation 74 comprend par exemple une sortie 104 débouchant dans une deuxième chambre intermédiaire d'actionnement 106 définie entre le manchon 8 et le tube 10 et qui communique avec la deuxième chambre d'actionnement 64 par l'intermédiaire de quatrièmes orifices intermédiaires 108 formés au travers du manchon 8. À cet effet, les quatrièmes orifices intermédiaires 108 sont par exemple agencés du premier côté C1 par rapport à la collerette 69.

La deuxième chambre intermédiaire d'actionnement 106 est séparée de la première chambre intermédiaire d'actionnement 98, par exemple par une deuxième portion à section interne restreinte 110 du manchon 8 conformée pour ménager un faible jeu vis-à-vis du tube 10 et ainsi limiter au mieux l'écoulement de fluide F axialement de part et d'autre de cette portion 110.

La deuxième portion à section interne restreinte 110 du manchon 8 est agencée de manière à ménager le faible jeu vis-à-vis du tube 10 indépendamment de la position axiale du manchon 8 (depuis la position accouplée jusque dans la position débrayée) et ainsi maintenir une séparation étanche ou sensiblement étanche entre la première chambre intermédiaire d'actionnement 98 et la deuxième chambre intermédiaire d'actionnement 106 dans toutes les phases d'utilisation de l'assemblage.

Par ailleurs, dans l'exemple illustré, les deuxièmes, troisièmes et quatrièmes orifices d'évacuation 58, 70, 71 débouchent sur une interface 112 d'engrènement des cannelures 25 du deuxième arbre 6 avec le pignon de renvoi 26 et permettent ainsi la lubrification de ladite interface 112.

En fonctionnement, le manchon d'accouplement 8 étant initialement dans la position accouplée (figure 2), le dispositif 76 alimente le premier canal d'alimentation 72 en fluide F sous pression mais pas le deuxième canal d'alimentation 74, moyennant quoi les chambres de lubrification 39 et 52 et la première chambre d'actionnement 62 sont alimentées en fluide F par l'intermédiaire des sorties 86, 88 et 90, de la chambre intermédiaire de lubrification 92, de la première chambre intermédiaire d'actionnement 98, et des orifices intermédiaires 94, 96, 102 correspondants. Il en résulte, d'une part, la lubrification des moyens d'accouplement 37 et 48, et, d'autre part, l'application du premier effort axial F1 au manchon d'accouplement 8, tendant à maintenir ce dernier dans la position accouplée.

Dans l'exemple illustré, l'interface 112 d'engrènement du deuxième arbre 6 avec le pignon de renvoi 26 est alimentée en fluide F par l'intermédiaire des deuxièmes et troisièmes orifices d'évacuation 58, 70.

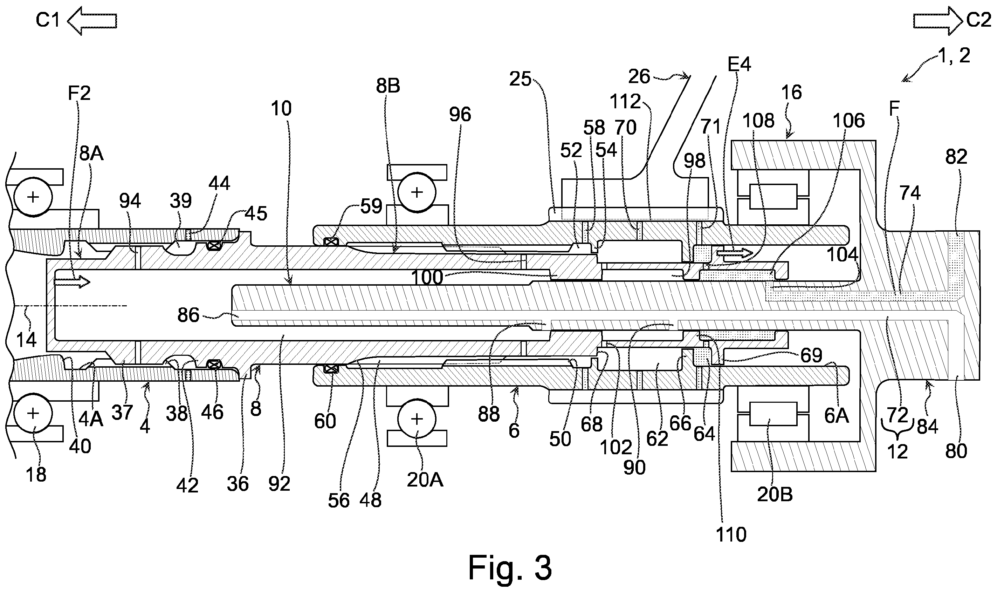

Lorsqu'un désaccouplement des arbres 4 et 6 est requis, le dispositif 76 est commandé pour inverser l'alimentation des canaux d'alimentation 72 et 74, c'est-à-dire pour cesser d'alimenter le premier canal d'alimentation 72 et commencer à alimenter le deuxième canal d'alimentation 74 (figure 3).

Par effet centrifuge, la chambre intermédiaire de lubrification 92 et la première chambre intermédiaire d'actionnement 98 se vident au travers des orifices intermédiaires 94, 96, 102 correspondants, tandis que la première chambre de lubrification 39 se vide au travers des premiers orifices d'évacuation 44.

Le deuxième canal d'alimentation 74 alimente quant à lui la deuxième chambre intermédiaire d'actionnement 106 par la sortie 104. De là, le fluide F pénètre dans la deuxième chambre d'actionnement 64 par les quatrièmes orifices intermédiaires 108.

La pression du fluide F dans la chambre 64 se traduit par l'application du deuxième effort axial F2 au manchon d'accouplement 8, provoquant le déplacement de ce dernier vers le deuxième côté C2, jusque dans la position débrayée (figure 4).

Durant cette phase, l'interface 112 d'engrènement du deuxième arbre 6 avec le pignon de renvoi 26 continue d'être alimentée en fluide F, au moins à partir de la deuxième chambre d'actionnement 64 par l'intermédiaire des quatrièmes orifices d'évacuation 71.

Dans certains modes de réalisation, des moyens de synchronisation (non décrits ici) permettent une mise à l'unisson et en coïncidence angulaire des arbres 4 et 6 afin de permettre leur réaccouplement. Dans un tel cas, le dispositif 76 est commandé pour réinverser l'alimentation des canaux 72, 74, c'est-à-dire cesser d'alimenter le deuxième canal d'alimentation 74 et commencer à réalimenter le premier canal d'alimentation 72, de sorte que le premier effort axial F1 soit de nouveau appliqué au manchon d'accouplement 8 et entraîne le déplacement de ce dernier jusque dans la position accouplée.

D'une manière générale, il apparaît donc que le premier canal d'alimentation 72 est en communication fluidique avec la première sélection de chambre(s) précitée, cette dernière comprenant les deux chambres de lubrification 39, 52 et la première chambre d'actionnement 62, tandis que le deuxième canal d'alimentation 74 est en communication fluidique avec la deuxième sélection de chambre(s) précitée, cette dernière ne comprenant dans cet exemple que la deuxième chambre d'actionnement 64.

Dans le premier mode de réalisation illustré sur les figures 2-4, comme expliqué ci-dessus, les chambres de lubrification 39 et 52 sont configurées de sorte que la pression du fluide F au sein desdites chambres se traduise par un effort axial nul ou faible appliqué au manchon d'accouplement 8 au regard de l'effort axial qui résulte de la pression du fluide F au sein de la première chambre d'actionnement 62. Autrement dit, la contribution de la pression du fluide F au sein de la première chambre d'actionnement 62 est (nettement) majoritaire dans la composition du premier effort axial F1.

Par ailleurs, bien que les chambres d'actionnement aient été décrites en tant que chambres annulaires, l'une et/ou l'autre des chambres d'actionnement 62 et 64 peut en variante être remplacée par une pluralité de chambres en forme de segment d'anneau réparties angulairement autour de l'axe 14.

De plus, les moyens d'accouplement 37, 48 peuvent être d'un type différent. Il peut ainsi s'agir de crabots.

En variante, la première chambre d'actionnement 62 peut être omise auquel cas il peut ne pas y avoir de premier effort axial F1 ou ce dernier peut être d'un niveau relativement modéré, découlant uniquement de la conformation des chambres de lubrification 39, 52, tandis que le deuxième effort axial F2 est encore déterminé par la deuxième chambre d'actionnement 64.

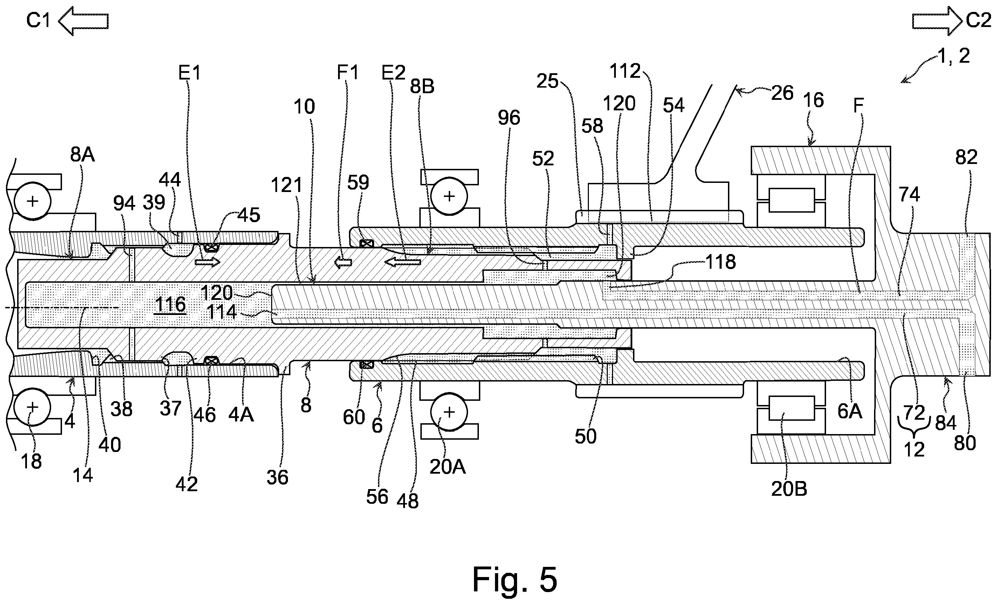

Les figures 5-7 illustrent un deuxième mode de réalisation de l'invention, globalement semblable à celui des figures 2-4 mais dans lequel les deux chambres d'actionnement 62, 64 sont omises.

Dans un tel cas, tant le premier effort axial F1 que le deuxième effort axial F2 résultent de la présence ou de l'absence du fluide F dans les chambres de lubrification 39 et 52 respectivement.

À cet effet, le premier canal d'alimentation 72 comprend par exemple une sortie 114 débouchant dans une première chambre intermédiaire de lubrification 116 définie entre le tube 10 et le manchon d'accouplement 8 et communiquant avec la première chambre de lubrification 39 via les premiers orifices intermédiaires 94, d'une manière analogue à ce qui est décrit ci-dessus concernant le premier mode de réalisation.

De plus, le deuxième canal d'alimentation 74 comprend par exemple une sortie 118 débouchant dans une deuxième chambre intermédiaire de lubrification 120 également définie entre le tube 10 et le manchon d'accouplement 8, et communiquant avec la deuxième chambre de lubrification 52 via les deuxièmes orifices intermédiaires 96, au moins dans la position accouplée.

La deuxième chambre intermédiaire de lubrification 120 est séparée de la première chambre intermédiaire de lubrification 116, par exemple en prévoyant un jeu limité 121 entre le manchon 8 et une portion d'extrémité 122 du tube 10 située du premier côté C1, et cela de préférence également quelle que soit la position axiale du manchon 8 (depuis la position accouplée jusque dans la position débrayée).

De plus, le manchon d'accouplement 8 est conformé de sorte que l'étanchéité de la première chambre de lubrification 39 soit maintenue quelle que soit la position axiale du manchon 8 (depuis la position accouplée jusque dans la position débrayée). À cet effet, la structure 42 est positionnée de manière à être entourée par le premier arbre 4 quelle que soit la position axiale du manchon 8 entre lesdites positions. Le cas échéant, la gorge 46 logeant le joint annulaire compressible 45 est positionnée de manière à être entourée par le premier arbre 4 quelle que soit la position axiale du manchon 8 entre lesdites positions, d'une manière permettant le maintien d'un contact entre le joint 45 et le premier arbre 4.

Les chambres de lubrification 39 et 52 sont ici configurées de sorte que les efforts axiaux E1 et E2 appliqués au manchon 8 respectivement du fait des pressions de fluide F au sein de ces chambres de lubrification 39 et 52 produisent une résultante orientée en direction du premier côté C1 et définissant le premier effort axial F1 précité, l'effort axial E1 étant orienté en direction du deuxième côté C2 et définissant le deuxième effort axial F2 précité.

La personne du métier comprendra que les moyens pour parvenir à un tel résultat reposent ici encore sur les choix d'orientation des surfaces délimitant les chambres de lubrification 39 et 52, sur les choix de diamètres intérieurs et extérieurs des chambres, et sur le choix d'agencer du premier côté C1 ou du deuxième côté C2 respectivement une surface solidaire du manchon 8 ou de l'un des arbres 4 et 6.

Ainsi, en fonctionnement, le manchon d'accouplement 8 étant initialement dans la position accouplée (figure 5), le dispositif 76 alimente à la fois le premier canal d'alimentation 72 et le deuxième canal d'alimentation 74 en fluide F sous pression, moyennant quoi les chambres de lubrification 39 et 52 sont alimentées en fluide F respectivement par l'intermédiaire des sorties 114 et 118, de la première chambre intermédiaire de lubrification 116 et de la deuxième chambre intermédiaire de lubrification 120, et des orifices intermédiaires 94 et 96 correspondants. Il en résulte, d'une part, la lubrification des moyens d'accouplement 37 et 48, et, d'autre part, l'application du premier effort axial F1 au manchon d'accouplement 8, tendant à maintenir ce dernier dans la position accouplée.

Dans l'exemple illustré, l'interface 112 d'engrènement du deuxième arbre 6 avec le pignon de renvoi 26 est alimentée en fluide F par l'intermédiaire des deuxièmes orifices d'évacuation 58.

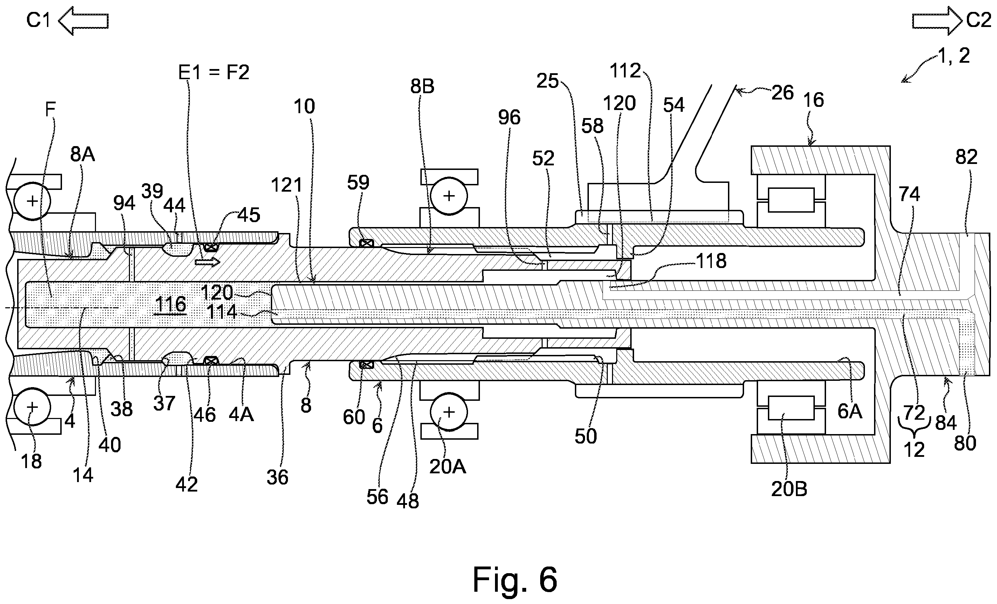

Lorsqu'un désaccouplement des arbres 4 et 6 est requis, le dispositif 76 est commandé pour cesser l'alimentation du deuxième canal d'alimentation 74 (figure 6).

Par effet centrifuge, la deuxième chambre intermédiaire de lubrification 120 se vide au travers des deuxièmes orifices intermédiaires 96, tandis que la deuxième chambre de lubrification 52 se vide au travers des deuxièmes orifices d'évacuation 58.

Le premier canal d'alimentation 72 continue d'alimenter la première chambre intermédiaire de lubrification 116 par la sortie 114. De là, le fluide F continue d'alimenter la première chambre de lubrification 39 via les premiers orifices intermédiaires 94.

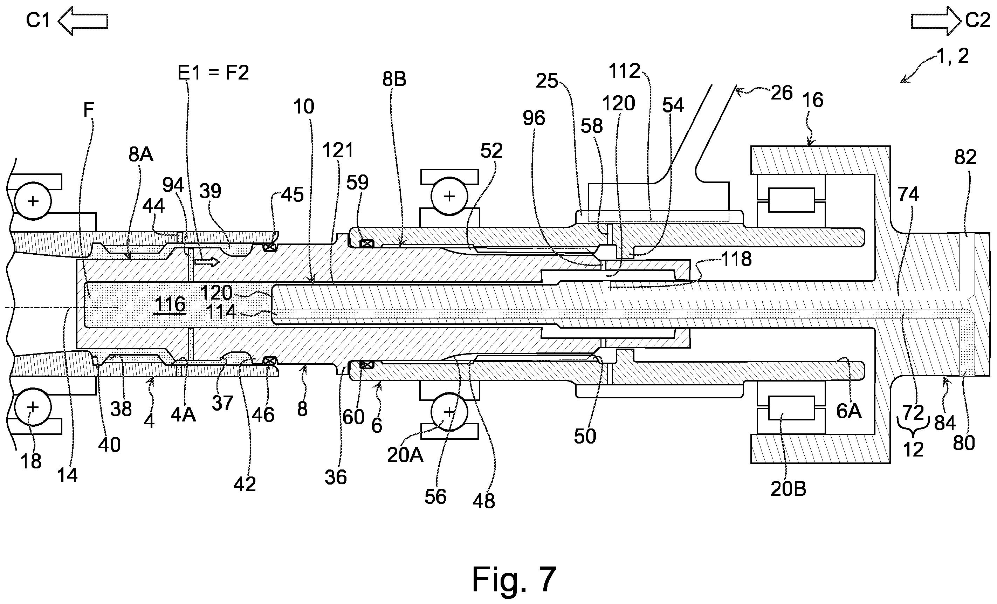

La pression du fluide F dans la chambre 39 se traduit par l'application du deuxième effort axial F2 (égal à l'effort axial E1) au manchon d'accouplement 8, et provoque donc le déplacement du manchon 8 vers le deuxième côté C2, jusque dans la position débrayée (figure 7).

Durant cette phase, l'interface 112 d'engrènement du deuxième arbre 6 avec le pignon de renvoi 26 n'est plus alimentée en fluide F à partir de la deuxième chambre de lubrification 52. Dans certains cas, des moyens annexes (non décrits) peuvent être prévus pour assurer l'alimentation de l'interface 112 en fluide de lubrification au moins dans la position débrayée, en complément des orifices 58, ou en lieu et place de ceux-ci.

Dans le cadre de ce deuxième mode de réalisation, il apparaît donc que le premier canal d'alimentation 72 est en communication fluidique avec la première sélection de chambre(s) précitée, cette dernière comprenant les deux chambres de lubrification 39, 52, tandis que le deuxième canal d'alimentation 74 est en communication fluidique avec la deuxième sélection de chambre(s) précitée, cette dernière ne comprenant dans cet exemple que la première chambre de lubrification 39.

D'une manière générale, dans le cadre des modes de réalisation décrits, l'ensemble des efforts axiaux appliqués au manchon d'accouplement 8 sont produits par la pression du fluide F au sein des chambres concernées. L'assemblage 2 à accouplement débrayable est ainsi configuré sans précharge.

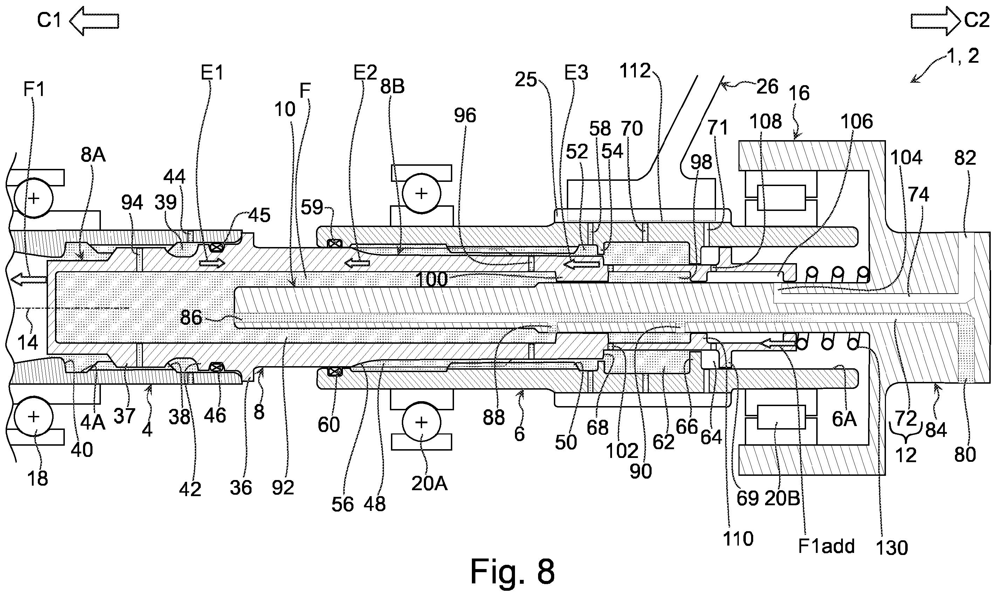

Dans d'autres modes de réalisation tel que celui illustré par la figure 8, un ressort de précharge 130 est en outre interposé entre le stator 16 et le manchon d'accouplement 8 de manière à appliquer à ce dernier un effort axial additionnel F1add vers le premier côté axial C1.

Le ressort 130 peut être prévu non rotatif, monté en appui contre le stator 16. Un système de roulement (non représenté) apte à transmettre une charge axiale peut être interposé entre le ressort 130 et le manchon d'accouplement 8 de manière à ce que la rotation du manchon selon l'axe 14 ne soit pas perturbée par un appui du ressort sur le manchon.

L'effort axial additionnel F1add s'ajoute au premier effort axial F1 et permet de garantir le maintien du manchon d'accouplement 8 en position accouplée, y compris dans les cas où, à bas régime, la pression du fluide au sein des chambres de fluide correspondantes ne serait pas suffisante à cet effet du fait de l'intensité moindre de l'effet centrifuge.

## Revendications

1. Assemblage (2) à accouplement débrayable pour ensemble propulsif (1) d'aéronef, comprenant :
- un premier arbre (4) et un deuxième arbre (6) montés à rotation selon un axe (14) par rapport à un stator (16) ;
- un manchon d'accouplement (8) comprenant des premiers moyens d'accouplement (37) agencés d'un premier côté axial (C1) et des deuxièmes moyens d'accouplement (48) agencés d'un deuxième côté axial (C2), le manchon d'accouplement (8) étant déplaçable axialement entre une première position dans laquelle les premiers et deuxièmes moyens d'accouplement (37, 48) sont respectivement accouplés aux premier et deuxième arbres (4, 6), et une deuxième position dans laquelle le manchon d'accouplement (8) est décalé vers le deuxième côté axial (C2) par rapport à la première position de sorte que les premiers moyens d'accouplement (37) soient désaccouplés du premier arbre (4) ;
- des chambres de fluide (39, 52, 62, 64) délimitées entre le manchon d'accouplement (8) et au moins l'un des premier et deuxième arbres (4, 6) ;
- un tube (10) solidaire du stator (16) et s'étendant dans un alésage du manchon d'accouplement (8) ; et
- des moyens d'alimentation en fluide (12);
et **caractérisé en ce que**,
les moyens d'alimentation en fluide (12) sont configurés pour alimenter sélectivement une première sélection de chambre(s) (39, 52, 62 ; 39, 52) parmi lesdites chambres de fluide et une deuxième sélection de chambre(s) (64 ; 39) parmi lesdites chambres de fluide avec un fluide (F), par l'intermédiaire dudit tube (10) ;
dans lequel les chambres de fluide sont configurées de sorte que :
- au moins lorsque le manchon d'accouplement (8) est dans la première position, une pression du fluide (F) dans la première sélection de chambre(s) (39, 52, 62 ; 39, 52) applique au manchon d'accouplement (8) un premier effort axial (F1) orienté vers le premier côté axial (C1) ; et que
- une pression du fluide (F) dans la deuxième sélection de chambre(s) (64 ; 39) applique au manchon d'accouplement (8) un deuxième effort axial (F2) orienté vers le deuxième côté axial (C2) de manière à amener ce dernier dans la deuxième position.

2. Assemblage selon la revendication 1, dans lequel les moyens d'alimentation en fluide (12) comprennent un premier canal d'alimentation (72) en communication fluidique avec la première sélection de chambre(s) (39, 52, 62 ; 39, 52), un deuxième canal d'alimentation (74) en communication fluidique avec la deuxième sélection de chambre(s) (64 ; 39), et un dispositif (76) d'alimentation sélective du premier canal d'alimentation (72) et du deuxième canal d'alimentation (74) avec ledit fluide (F).

3. Assemblage selon la revendication 1 ou 2, dans lequel la première sélection de chambre(s) comprend des chambres de lubrification (39, 52) des premiers et deuxièmes moyens d'accouplement (37, 48), et au moins une première chambre d'actionnement (62) configurée de sorte que, au moins lorsque le manchon d'accouplement (8) est dans la première position, ledit premier effort axial (F1) est au moins majoritairement produit par la pression du fluide (F) dans la ou les première(s) chambre(s) d'actionnement (62).

4. Assemblage selon la revendication 3, dans lequel la deuxième sélection de chambre(s) comprend au moins une deuxième chambre d'actionnement (64) et ne comprends pas lesdites chambres de lubrification (39, 52) des premiers et deuxièmes moyens d'accouplement (37, 48).

5. Assemblage selon la revendication 1 ou 2, dans lequel la première sélection de chambre(s) comprend uniquement une ou plusieurs chambre(s) de lubrification (39) des premiers moyens d'accouplement (37) et une ou plusieurs chambre(s) de lubrification (52) des deuxièmes moyens d'accouplement (48), et la deuxième sélection de chambre(s) comprend uniquement la ou les chambre(s) de lubrification (39) des premiers moyens d'accouplement (37).

6. Assemblage selon l'une quelconque des revendications 1 à 5, dans lequel les premiers et/ou deuxièmes moyens d'accouplement (37, 48) forment des cannelures ou définissent une liaison par crabots.

7. Ensemble propulsif (1) pour aéronef, comprenant un récepteur (32), une machine électrique (24), une turbomachine (30) et un assemblage (2) selon l'une quelconque des revendications 1 à 6, dans lequel le premier arbre (4) de l'assemblage est en prise mécanique avec un rotor (22) de la machine électrique (24) tandis que le deuxième arbre (6) de l'assemblage est en prise mécanique avec un rotor (28) de la turbomachine (30), et dans lequel au moins l'une parmi la machine électrique (24) et la turbomachine (30) est configurée pour transmettre une puissance propulsive au récepteur (32).

8. Ensemble propulsif selon la revendication 7, comprenant un pignon de renvoi (26) en prise mécanique avec le deuxième arbre (6) et avec le rotor (28) de la turbomachine (30).

9. Ensemble propulsif selon la revendication 8, dans lequel au moins la première sélection de chambre(s) est en communication fluidique avec une interface (112) d'engrènement du deuxième arbre (6) avec le pignon de renvoi (26).

10. Ensemble propulsif selon la revendication 9, dans lequel la deuxième sélection de chambre(s) est aussi en communication fluidique avec l'interface (112).

11. Ensemble propulsif selon l'une quelconque des revendications 7 à 10, dans lequel la machine électrique (24) est configurée pour recevoir, du premier arbre (4), une puissance propulsive.

## Patentansprüche

1. Baugruppe (2) mit ausrückbarer Kupplung für eine Antriebseinheit (1) eines Flugzeugs, umfassend:
- eine erste Welle (4) und eine zweite Welle (6), die drehbar entlang einer Achse (14) in Bezug auf einen Stator (16) montiert sind;
- eine Kupplungsmuffe (8), die erste Kupplungsmittel (37) umfasst, die an einer ersten axialen Seite (C1) angeordnet sind, und zweite Kupplungsmittel (48), die an einer zweiten axialen Seite (C2) angeordnet sind, wobei die Kupplungsmuffe (8) axial zwischen einer ersten Position, in der die ersten und zweiten Kupplungsmittel (37, 48) jeweils an die erste und zweite Welle (4, 6) gekoppelt sind, und einer zweiten Position, in der die Kupplungsmuffe (8) relativ zu der ersten Position zu der zweiten axialen Seite (C2) hin versetzt ist, so dass die ersten Kupplungsmittel (37) von der ersten Welle (4) entkoppelt sind;
- Fluidkammern (39, 52, 62, 64), die zwischen der Kupplungsmuffe (8) und mindestens einer der ersten und zweiten Wellen (4, 6) begrenzt sind;
- ein Rohr (10), das fest mit dem Stator (16) verbunden ist und sich in eine Bohrung der Kupplungsmuffe (8) erstreckt; und
- Fluidversorgungsmittel (12); und **dadurch gekennzeichnet, dass** die Fluidversorgungsmittel (12) so eingerichtet sind, dass sie eine erste Auswahl von Kammer(n) (39, 52, 62; 39, 52) unter den Fluidkammern und eine zweite Auswahl von Kammer(n) (64; 39) unter den Fluidkammern über das Rohr (10) selektiv mit einem Fluid (F) versorgen;
wobei die Fluidkammern so eingerichtet sind, dass:
- mindestens, wenn sich die Kupplungsmuffe (8) in der ersten Position befindet, ein Druck des Fluids (F) in der ersten Auswahl von Kammer(n) (39, 52, 62; 39, 52) der Kupplungsmuffe (8) eine erste axiale Kraft (F1) ausübt, die zu der ersten axialen Seite (C1) gerichtet ist; und
- ein Druck des Fluids (F) in der Auswahl von Kammer(n) (64; 39) auf die Kupplungsmuffe (8) eine zweite axiale Kraft (F2) ausübt, die zu der zweiten axialen Seite (C2) gerichtet ist, um diese in die zweite Position zu bringen.

2. Baugruppe nach Anspruch 1, wobei die Fluidversorgungsmittel (12) einen ersten Versorgungskanal (72) in fluidischer Verbindung mit der ersten Auswahl von Kammer(n) (39, 52, 62; 39, 52), einen zweiten Versorgungskanal (74) in fluidischer Verbindung mit der zweiten Auswahl von Kammer(n) (64; 39) und eine Vorrichtung (76) zu der selektiven Versorgung des ersten Versorgungskanals (72) und des zweiten Versorgungskanals (74) mit dem Fluid (F) umfassen.

3. Baugruppe nach Anspruch 1 oder 2, wobei die erste Auswahl von Kammer(n) Schmierkammern (39, 52) der ersten und zweiten Kupplungsmittel (37, 48) umfasst und mindestens eine erste Betätigungskammer (62) so eingerichtet ist, dass, mindestens wenn sich die Kupplungsmuffe (8) in der ersten Position befindet, die erste Axialkraft (F1) mindestens überwiegend durch den Druck des Fluids (F) in der oder den ersten Betätigungskammern (62) erzeugt wird.

4. Baugruppe nach Anspruch 3, wobei die zweite Auswahl von Kammer(n) mindestens eine zweite Betätigungskammer (64) umfasst und nicht die Schmierkammern (39, 52) der ersten und zweiten Kupplungsmittel (37, 48) umfasst.

5. Baugruppe nach Anspruch 1 oder 2, wobei die erste Auswahl von Kammer(n) nur eine oder mehrere Schmierkammern (39) der ersten Kupplungsmittel (37) und eine oder mehrere Schmierkammern (52) der zweiten Kupplungsmittel (48) umfasst, und die zweite Auswahl von Kammer(n) nur die Schmierkammer(n) (39) der ersten Kupplungsmittel (37) umfasst.

6. Baugruppe nach einem der Ansprüche 1 bis 5, wobei die ersten und/oder zweiten Kupplungsmittel (37, 48) Verzahnungen bilden oder eine Klauenkupplung definieren.

7. Antriebseinheit (1) für ein Flugzeug, umfassend einen Empfänger (32), eine elektrische Maschine (24), eine Turbomaschine (30) und eine Baugruppe (2) nach einem der Ansprüche 1 bis 6, wobei die erste Welle (4) der Baugruppe mechanisch in einen Rotor (22) der elektrischen Maschine (24) eingreift, während die zweite Welle (6) der Baugruppe mechanisch in einen Rotor (28) der Turbomaschine (30) eingreift, und wobei mindestens eine der elektrischen Maschine (24) und der Turbomaschine (30) so eingerichtet ist, dass sie eine Antriebsleistung an den Empfänger (32) überträgt.

8. Antriebseinheit nach Anspruch 7, umfassend ein Umlenkzahnrad (26), das mechanisch in Eingriff mit der zweiten Welle (6) und mit dem Rotor (28) der Turbomaschine (30) steht.

9. Antriebseinheit nach Anspruch 8, wobei mindestens die erste Auswahl von Kammer(n) mit einer fluidischen Schnittstelle (112) zu dem Eingriff der zweiten Welle (6) mit dem Umlenkzahnrad (26) in Verbindung steht.

10. Antriebseinheit nach Anspruch 9, wobei die zweite Auswahl von Kammer(n) auch in fluidischer Verbindung mit der Schnittstelle (112) stehen.

11. Antriebseinheit nach einem der Ansprüche 7 bis 10, wobei die elektrische Maschine (24) so eingerichtet ist, dass sie von der ersten Welle (4) eine Antriebsleistung empfängt.

## Claims

1. Assembly (2) with disengageable coupling for aircraft propulsion assembly (1), comprising:
- a first shaft (4) and a second shaft (6) rotatably mounted along an axis (14) relative to a stator (16);
- a coupling sleeve (8) comprising the first coupling means (37) arranged on a first axial side (C1) and second coupling means (48) arranged on a second axial side (C2), the coupling sleeve (8) being movable axially between a first position in which the first and second coupling means (37, 48) are respectively coupled to the first and second shafts (4, 6), and a second position in which the coupling sleeve (8) is shifted towards the second axial side (C2) relative to the first position such that the first coupling means (37) are uncoupled from the first shaft (4);
- fluid chambers (39, 52, 62, 64) delimited between the coupling sleeve (8) and at least one of the first and second shafts (4, 6);
- a tube (10) secured to the stator (16) and extending into a bore of the coupling sleeve (8); and
- fluid supply means (12) ;
and **characterized in that** the fluid supply means (12) are configured to selectively supply a first selection of chamber(s) (39, 52, 62; 39, 52) of said fluid chambers and a second selection of chamber(s) (64; 52) of said fluid chambers with a fluid (F), via said tube (10);
wherein the fluid chambers are configured such that:
- at least when the coupling sleeve (8) is in the first position, a fluid pressure (F) in the first selection of chamber(s) (39, 52, 62; 39, 52) applies to the coupling sleeve (8) a first axial force (F1) oriented towards the first axial side (C1); and
- a fluid pressure (F) in the second selection of chamber(s) (64; 39) applies to the coupling sleeve (8) a second axial force (F2) oriented towards the second axial side (C2) so as to bring the latter into the second position.

2. Assembly according to claim 1, wherein the fluid supply means (12) comprise a first supply channel (72) in fluid communication with the first selection of chamber(s) (39, 52, 62; 39, 52), a second supply channel (74) in fluid communication with the second selection of chamber(s) (64; 39), and a device (76) for selectively supplying the first supply channel (72) and the second supply channel (74) with said fluid (F).

3. Assembly according to claim 1 or 2, wherein the first selection of chamber(s) comprises lubrication chambers (39, 52) of the first and second coupling means (37, 48), and at least one first actuating chamber (62) configured so that, at least when the coupling sleeve (8) is in the first position, said first axial force (F1) is at least mainly produced by the pressure of the fluid (F) in the first actuating chamber(s) (62).

4. Assembly according to claim 3, wherein the second selection of chamber(s) comprises at least one second actuating chamber (64) and does not comprise said lubrication chambers (39, 52) of the first and second coupling means (37, 48).

5. Assembly according to claim 1 or 2, wherein the first selection of chamber(s) comprises only one or more lubrication chamber(s) (39) of the first coupling means (37) and one or more lubrication chamber(s) (52) of the second coupling means (48), and the second selection of chamber(s) comprises only the lubrication chamber(s) (39) of the first coupling means (37).

6. Assembly according to any one of claims 1 to 5, wherein the first and/or second coupling means (37, 48) form splines or define a dog-clutch connection.

7. Propulsion assembly (1) for an aircraft, comprising a receiver (32), an electric machine (24), a turbomachine (30) and an assembly (2) according to any one of claims 1 to 6, wherein the first shaft (4) of the assembly is mechanically engaged with a rotor (22) of the electric machine (24) while the second shaft (6) of the assembly is mechanically engaged with a rotor (28) of the turbomachine (30), and wherein at least one of the electric machine (24) and the turbomachine (30) is configured to transmit propulsive power to the receiver (32).

8. Propulsion assembly according to claim 7, comprising an idler pinion (26) mechanically engaged with the second shaft (6) and with the rotor (28) of the turbomachine (30).

9. Propulsion assembly according to claim 8, wherein at least the first selection of chamber(s) is in fluid communication with an interface (112) for meshing the second shaft (6) with the idler pinion (26).

10. Propulsion assembly according to claim 9, wherein the second selection of chamber(s) is also in fluid communication with the interface (112).

11. Propulsion assembly according to any one of claims 7 to 10, wherein the electric machine (24) is configured to receive, from the first shaft (4), propulsive power.
